# EUROPEAN PATENT SPECIFICATION

(11) **EP 3 878 301 B1**
(45) Date of publication and mention of the grant of the patent: **26.10.2022**
(21) Application number: 21162168.5
(22) Date of filing: 11.03.2021
(51) Int. Cl.: A43B 7/142, A43B 7/143, A43B 7/1475, A43B 17/00, A43B 17/14, A43D 1/02, B29D 35/12, B29D 35/14

(54) **INSOLE DESIGNING AND MANUFACTURING METHOD**
VERFAHREN ZUM ENTWERFEN UND PRODUZIEREN EINER EINLEGESOHLE
MÉTHODE POUR CONCEVOIR ET PRODUIRE UNE SEMELLE INTÉRIEURE

(30) Priority: 12.03.2020 IT 202000005392
(43) Date of publication of application: 15.09.2021
(73) Proprietor: Base Protection Srl, 76121 Barletta (BT) (IT)
(72) Inventor: DE LUCA, Cataldo, 76125 Trani (BT) (IT); PESCE, Marta, 70054 Giovinazzo (BA) (IT); CARAVAGGI, Paolo, 40126 Bologna (BO (IT); ROGATI, Giulia, 40121 Bologna (BO) (IT)
(74) Representative: Postiglione, Ferruccio

(56) References cited:
- US-A- 5 463 824
- US-A1- 2004 181 976
- US-A1- 2009 307 927
- US-A1- 2018 020 772

## Description

### TECHNICAL FIELD

The present invention relates to designing and manufacturing methods for a shoe insole such as, in particular but not limited to, safety footwear.

### STATE OF ART

Insoles are known (also called anatomical insoles), destined to be positioned in the gap between the sole and the upper part of a shoe, mainly used to improve the comfort of the user. Such insoles, often used in safety shoes, are not intended to act as a insole orthosis.

The use of a suitable insole leads to a lower muscle fatigue, allowing to keep feet and legs relaxed, even at the end of a working day.

For example, a particular insole is described in IT patent 1396536, in which the problem of eliminating the steam that forms inside the shoe is faced.

US Patent 5463824 describes a insole having an upper portion, a lower portion made of elastomeric material and a layer of interwoven non-elastic fibers, integrally fixed between the upper portion and the lower portion, in order to withstand lateral and longitudinal stretching during use.

### SUMMARY OF THE INVENTION

The Applicant has observed that the modes currently used for the design of insoles are not able to adequately combine the user's needs, in terms of comfort, with the needs of an industrial production.

The technical problem faced by the present invention is to propose a insole designing method, suitable to satisfy both the user's comfort needs and those of a design and production compatible with an industrial manufacture.

According to the present invention, the above problem is solved by a designing method as defined by claim 1 and by its preferred embodiments, defined by dependent claims 2-3.

Also the present invention provides an insole manufacturing method, as defined by claims 4-10.

### BRIEF DESCRIPTION OF THE DRAWINGS

The present invention is hereinafter described in detail, by way of non-limiting example, with reference to the attached drawings, in which:
- figure 1 shows, by way of example, a foot sole in which a plantar arch is outlined, such as the medial longitudinal arch;
- figure 2a shows a top plan view of an insole;
- figure 2b shows a side view of said insole;
- figure 3 shows by way of example a view of a foot sole on which some dimensional sizes of the foot itself are indicated,
- figure 4a shows a top plan view of a foot on which the dimensional parameter relating to the position of the toes is indicated;
- figure 4b shows a side view of a foot on which the dimensional parameter relating to the height of the instep is indicated;
- figure 5 shows an example of a first portion of a insole;
- figure 6 shows a perspective view of an example of a complete insole;
- figure 7 shows a bottom lower plan view of said example of the complete insole.

### DETAILED DESCRIPTION

While the invention is susceptible of various modifications and alternative structures, some particular embodiments are shown in the drawings and will be described in detail below. In the present description, similar or identical elements or components will be indicated in the figures with the same identification symbol.

An insole designing method and an insole manufacturing method will be described below. For example, the considered insoles are of the type that can be employed in the safety sector, but this does not exclude that the described designing and manufacturing methods can also be referred to obtain other types of insoles.

In particular, the insoles of the type here considered (also known as anatomical insole) are intended to be positioned (in a removable way) in the gap between the sole and the shoe upper and are mainly used to improve the user's comfort, without the purpose of acting as a insole orthosis.

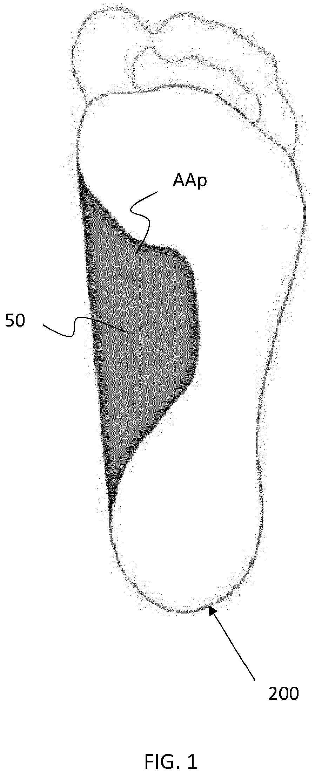

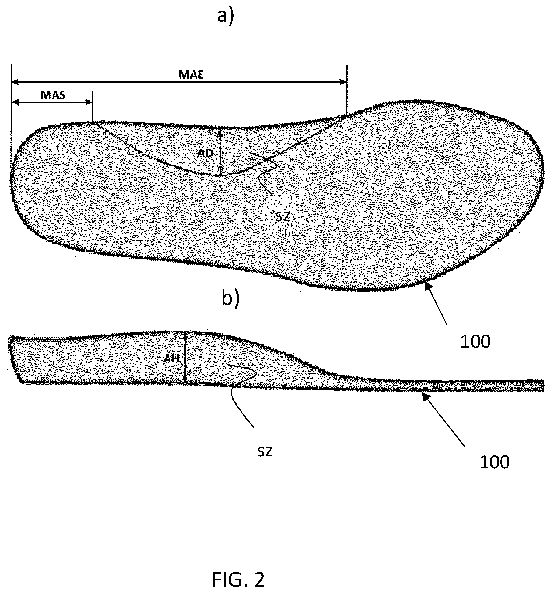

Figure 1 shows a foot sole 200 and also a plan projection of a plantar arch 50, also called "medial longitudinal arch", is highlighted. Figure 2 shows an example of an insole 100 having a support for plantar arch SZ (schematically represented in figure 2), i.e. a three-dimensional area of the insole 100 configured to support the medial longitudinal arch 50 of the foot 200.

It must be noted that the area highlighted in figure 1 and indicated with AA_{P} is the Arch Area of the foot, therefore the area of the medial longitudinal arch.

The described designing method involves a phase of definition of the following configuration parameters of the support for plantar arch SZ:
- MAS: initial portion of the support for plantar arch;
- MAE: final portion of the support for plantar arch;
- AD: depth of the support for plantar arch;
- AH: height of the support for plantar arch.

The meaning of such design parameters is explained not only by the above definition, but also by the representation of figure 2, in which the parameters themselves (i.e. the distances) are shown on the two views of the insole 100.

Furthermore, with reference to the user's foot 200, the following dimensional parameters of the foot are defined:
- a foot length FLp ;
- a foot width FW_{P}.

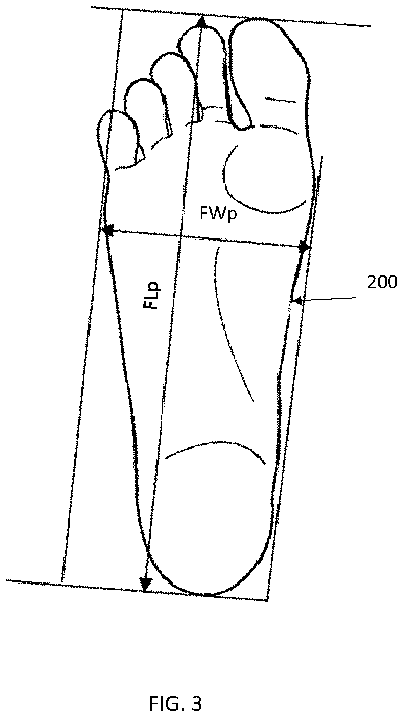

The dimensional parameters FLp and FWp are also represented in figure 3, together with a plenum of the foot 200.

More in detail, the parameter FLp represents the distance between two straight lines tangential to the points located in the rear and front end of the foot, which are also perpendicular to the line tangential to the medial side of the foot. Parameter FWp represents the distance between the tangent line to the middle side of the foot and a line parallel to it, passing through the most extreme point of the lateral part of the foot.

The designing method also provides for the definition, by using these configuration parameters (MAS; MAE, AD and AH), of three types of supports for plantar arch:
A) support low plantar arch
B) support for middle plantar arch
C) support for high plantar arch

In particular, the three types of supports for plantar arch are defined as a function of the dimensional parameters of a foot (FLp and FWp) and according to the following mathematical relations:
- support "low" plantar arch with configuration parameters equal to
   MAS = (29 ± 3)% of FL_{P} ;
   MAE = (65 ± 2)% of FL_{P} ;
   AD = (48 ± 5)% of FW_{P} ;
   AH = 11.5 ± 2 mm;
- support "medium" plantar arch with configuration parameters equal to:
   MAS = (27 ± 2)% of FL_{P} ;
   MAE = 64 (± 2)% of FL_{P} ;
   AD = (56 ± 5)% of FW_{P} ;
   AH = 14.5 ± 2 mm
- support for "high" plantar arch with configuration parameters equal to:
   MAS = (26 ± 2)% of FL_{P} ;
   MAE = (66 ± 2)% of FL_{P} ;
   AD = (60 ± 5)% of FW_{P} ;
   AH = 18.5 ± 2 mm.

As can be seen from the above relations, the configuration parameters MAS and MAE are percentages (variable within the indicated ranges) of the values of the foot length FL_{P}. Instead, the configuration parameter AD is a percentage (also variable within a range) of the width FWp of the user's foot 200. It should be noted that the height configuration parameter for the plantar arch support AH is defined by the relations indicated above, calculated on a statistical basis, for predetermined values of the size parameters FL_{P} and FW_{P} of the foot 200.

It should be noted that the plantar arch support SZ works as a kind of "cushion" present in correspondence with the medial longitudinal arch. In other words, the support for plantar arch SZ is a protrusion that "fills" the medial longitudinal arch 50, which is instead corresponding to a cavity.

The volume of this cavity is less for feet with a "low" medial longitudinal arch and increases gradually for feet with a higher medial longitudinal arch 50.

Having conceived three types of insole allows to offer a product that can be industrially made but is particularly suitable for the support function it must perform, as it has such shape and dimensions, in order to be a substantially complementary with the cavity defined by the medial longitudinal arch. In fact, the insoles designed with a support for plantar arch defined by the mathematical relations indicated above allow to improve the comfort for the user compared to conventional insoles, as verified by statistical studies.

For the design of a specific support for plantar arch SZ of an insole 100, a measurement of the dimensional parameters FLp and FWp of a foot 200 of a particular user takes place. The measurement of the dimensional parameters FLp and FWp can preferably take place starting from a 3D model of the foot. An example of how to perform a scan to obtain digital images and therefore the 3D model of the foot is described in document WO2018/109421.

Therefore, once having obtained the measured values of the parameters FLp and FWp and by using the relationships indicated above in relation to one of the three types (low, medium, high), it will be possible to obtain values of specific configuration parameters (MAS; MAE, AD and AH) to be used to design a specific support for plantar arch SZ, by using the above mathematical relations.

Considering the parameters that define the specific support for plantar arch SZ, designed as described above, the designing of the entire insole 100 can then take place.

Advantageously, the designing method described here also allows one of the three types of supports for plantar arch SZ to be associated in a particularly satisfactory way with the user's foot 200.

With reference to a particular method of choosing the type of insole, the following other dimensional parameters of the user's foot 200 are measured: an area of the plantar arch AAp ; a position of the toes TPp of the foot; the height of the instep of the foot IHp.

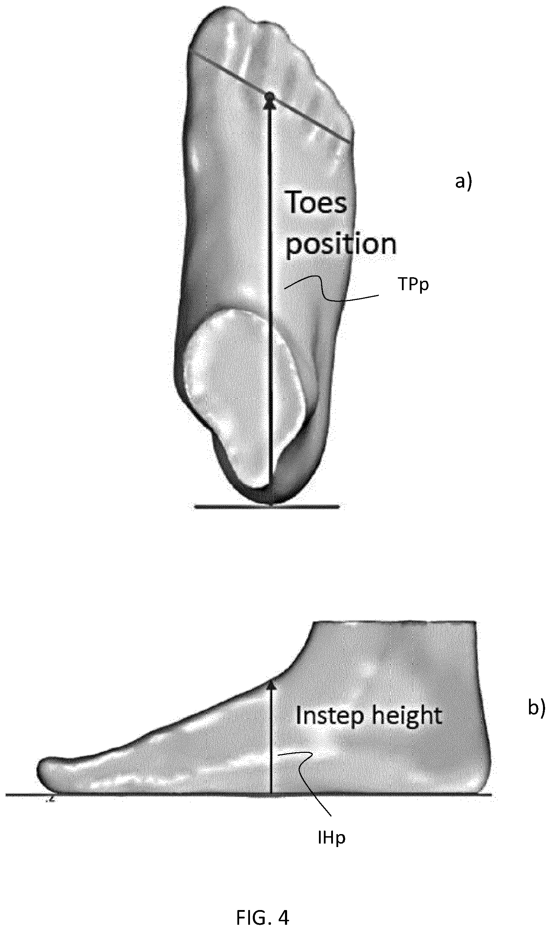

Figure 1 shows the area AAp (expressed in mm²) while figures 4 explains how to evaluate the parameters:
- "position of the toes" TPp (toes position, figure 4a), expressed in mm; and
- "instep height" IHp (instep hight, figure 4b); expressed in mm.

More in detail, the parameter AA_{P} represents the area of the surface delimited by the footprint and by a segment positioned on the medial side, tangent in two points of the footprint. The parameter TPp represents the distance between the point located at the rear end of the foot and the center point of the toe section. The parameter IHp represents the maximum height of the instep of the foot (instep section).

The values of the dimensional parameters indicated above can also be obtained from 3D models of the foot.

The measured values of the parameters AA_{P}, TP_{P} and IH_{P} are used to calculate a first index *aarci* and a second index *aarci H,* in accordance with the following formulae:
- first index *aarci=* AA_{P}/TP_{P},
- second index *aarci H* = (AA_{P}*IH_{P})/TP_{P}².

The first index *aarci* and the second index *aarci H* are then compared with intervals of predetermined values (the result of statistical analysis) to associate a specific foot 200 to a specific type among the three types indicated above.

The table below permits to determine the type (low = L, medium = M, high = H) based on the indices *aarci* and *aarci H,* according to a possible example.

In fact, it is possible to associate to each row of the table a particular range of values of the index *aarci H* and to each column a particular range of values of the index *aarci.* For example, regarding the rows there are increasing values *of aarci H* from the bottom to the top of the table and regarding the columns there are increasing values of *aarci* from left to right.

Therefore, the use of the first index *aarci* and of the second index *aarci H,* together with the table, allows, according to an example, to determine the type (low, medium, high) of the support for plantar arch SZ, the configuration parameters of which can be determined with the relationships indicated above.

| | | | | | |
|---|---|---|---|---|---|
| M | M | M | H | H | H |
| L | M | M | M | M | H |
| L | L | M | M | M | M |
| L | L | L | M | M | M |
| L | L | L | L | M | M |

The successful design of the support for plantar arch SZ then allows to proceed with designing and manufacturing the entire insole 100. The three types of insole (with low, medium, high support SZ) can be manufactured with the same process.

According to a particular example, the manufacture of the insole 100 can take place according to known techniques, and is such as to lead, for example, to a two-density insole.

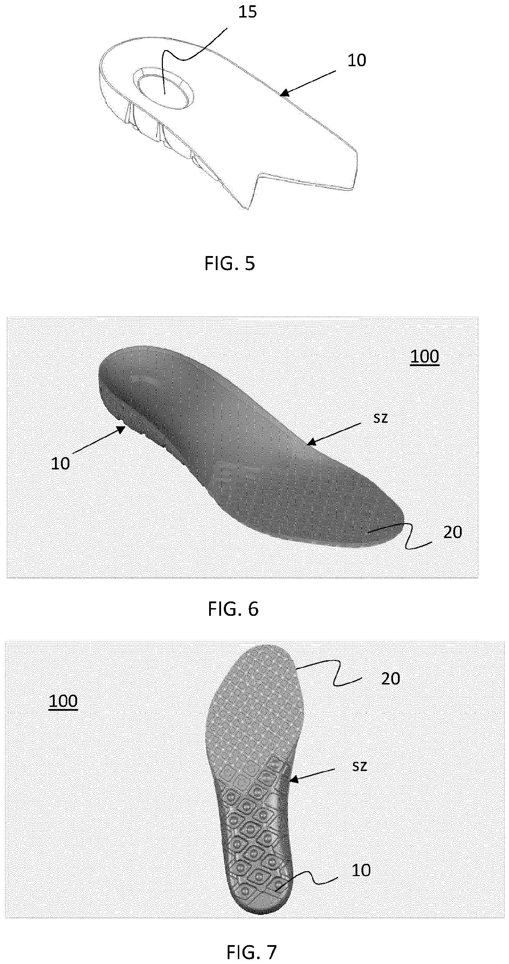

In greater detail, according to this exemplary method, a first portion 10 is made through a first molding process (figure 5). The first portion 10 is the rear portion of the insole 100 which has the function of supporting the weight of the person's body and conferring stability. For example, the first portion 10 is made of a high-density polyurethane material, having a hardness not lower than 55 Shore A.

According to the example considered, then a second process of molding is carried out, by injecting the material to obtain a second insole portion 20 (figure 6) that covers the first portion 10 and constitutes the top and front portion of the foot. For example, to obtain the second insole portion 20, a polyurethane material with memory effect is injected. For example, the used memory effect material has a hardness lower than 55 Shore A.

The second insole portion 20 has the function of making the insole 100 perfectly conforming to the geometry of the foot and providing the sensation of a custom-made insole.

The manufacturing method may further comprise a piercing process of the insole 100 for allowing air to escape, being it therefore free to circulate through channels made in the same insole and connected to each other, in accordance with the teachings of the Italian patent IT 1396536.

It should be noted that, according to an example, the thickness of the second of insole portion 20 made of memory material can be about 4 mm and constant over the entire insole 100. According to another example, the second insole portion 20 made of memory material has a variable thickness in some areas, as in the cases indicated below.

The insoles 100 may advantageously have a hollow area 15, positioned in the first portion 10 in correspondence of the heel spur of the foot (figure 5). The memory-effect material of the second insole portion 2 fills this cavity 15. With this geometric characteristic, the ratio between the thicknesses of the high- density material of the first portion 10 and the lowdensity material of the second portion 20 of the insole is approximately equal to 1, therefore the entire thickness of the insole 100 is made up of 50% of high- density material and 50% of memory-effect material.

The characteristic relating to the cavity 15 has the function of reducing insole pressures on the heel, therefore preventing/reducing the pain deriving from overloading of this area.

It should also be noted that, according to the realization of insole 100, the area on the support for plantar arch SZ (figure 2 and figures 6 - 7) includes both a part of the first insole portion 10 and a part of the second insole portion 20, and then it is characterized by variable thicknesses of high-density material and memory-effect material. In particular, in the central area of the support SZ, the percentages are approximately equal to 60% of high-density material and 40% of memory-effect material. This characteristic allows to offer the user a comfortable and non-corrective support, capable of redistributing the insole pressures over the entire support area and reducing pressure peaks that are generally concentrated in the heel and forefoot area.

The subdivision of the insoles that can be manufactured within the three listed types (low, medium and high), together with the particular mathematical relations indicated for the definition of the configuration parameters and for the selection of the type of support for plantar arch SZ, allows to combine the industrial manufacturing up to a final product, suitable to satisfy the comfort needs of the user of the insole.

## Claims

1. Designing method of an insole for a user, comprising the steps of:
- defining the following configuration parameters of supports plantar arch (SZ): initial portion of support for a plantar arch MAS; final portion of support for a plantar arch MAE; depth of support for a plantar arch AD; height of support for plantar arch AH;
- defining a first plurality of dimensional parameters of a foot (200) including: a foot length FLp; a foot width FWp;
- defining, through said configuration parameters, three types of support for plantar arch in accordance with the following relationships and as a function of the first plurality of dimensional parameters of a foot:
A) support for low plantar having parameters equal to: MAS = (29 ± 3)% of FL_{P} ; MAE = (65 ± 2)% of FL_{P}; AD = (48 ± 5) % of FW_{P} ; AH = 11.5 ± 2 mm;
B) support for middle plantar arch having parameters equal to : MAS = (27 ± 2)% of FLp; MAE = (64 ± 2)% of FL_{P}; AD = (56 ± 5)% of FW_{P}; AH = 14.5 ± 2 mm;
C) support for high plantar arch having parameters equal to: MAS = (26± 2)% of FLp ; MAE = (66 ± 2)% of FL_{P}; AD = (60 ± 5)% of FW_{P} ; AH = 18.5 ± 2 mm;
- measuring the first plurality of parameters of a user's foot;
- designing an insole (100) for said user having a support for the plantar arch (SZ) defined by the configuration parameters of one of said three types.

2. Method according to claim 1 further comprising the steps of:
- measuring the following second plurality of dimensional parameters of the user's foot (200): an area of the plantar arch AAp; a position of the toes TPp; a height of the instep IHp;
- calculating the following indices from the second plurality of dimensional parameters:
a first index *aarci* = AA_{P}/TP_{P},
a second index *aarci H* = (AA_{P}*IH_{P}) /TP_{P}² ;
- comparing the first index and the second index with predetermined ranges of values in order to associate the foot to a specific type among said three types of supports for plantar arch (SZ).

3. Method according to at least one of the preceding claims, wherein the support for plantar arch (SZ) is designed to act as a support for the medial longitudinal arch of the foot (200) of the user.

4. Method of manufacturing an insole (100), comprising the steps of:
- designing an insole (100) according to the designing method of at least one of the preceding claims;
- producing the insole (100) by joining a first insole portion (10) and a second insole portion (20).

5. Manufacturing method according to claim 4, wherein the step of producing the insole (100) comprises the step of:
- manufacturing by molding of a first polyurethane material, the first portion (10) intended to form a rear portion of said insole (100).

6. Manufacturing method according to claim 5, wherein said first polyurethane material has a hardness of not less than 55 Shore A.

7. Manufacturing method according to claim 4 or 5, wherein the step of producing the insole (100) also comprises the step of:
- manufacturing by molding of a second polyurethane material, the second insole portion (20) intended to cover a part of said first portion (10) and to form a front portion of the insole (100).

8. Manufacturing method according to claim 7, wherein said second polyurethane material has a hardness less than 55 Shore A.

9. Method according to at least one of claims 7 and 8, wherein the step of producing said first portion of the insole (10) comprises the step of:
- forming a cavity (15) in said first insole portion (10) in correspondence with the calcaneal spur of the foot (200);
- filling said cavity (15) with said second polyurethane material forming the second insole portion (20) .

10. Manufacturing method according to at least one of claims 5 to 9 wherein manufacturing of said first insole portion (10) and of said second insole portion (20) comprises forming said support for plantar arch (SZ) having areas of different density.

## Patentansprüche

1. Verfahren zum Gestalten einer Innensohle für einen Benutzer, umfassend die Schritte:
- Definition
der folgenden Konfigurationsparameter für Fußgewölbestützen (SZ): Beginn der MAS- Fußgewölbestütze ; Ende der MAE- Fußgewölbestütze ; Tiefe der AD-Fußgewölbestütze; Höhe der AH- Fußgewölbestütze (SZ);
- Definition einer ersten Vielzahl von Dimensionsparametern eines Fußes (200), einschließlich: einer Fußlänge FLp ; eine Fußbreite FWp ;
- Definition, mittels der genannten Konfigurationsparameter, von drei Stützarten für die Fußgewölbestütze gemäß den folgenden Beziehungen und in Abhängigkeit von der ersten Vielzahl von Dimensionsparametern eines Fußes:
A) Unterstützung der niedrigen Fußgewölbestütze mit Parameter gleich : MAS = (29 ± 3) % von FLp ; MAE = (65 ± 2) % von FLp ; AD = (48 ± 5) % von FWp ; AH = 11, 5 ± 2 mm;
B) Unterstützung der mittleren Fußgewölbestütze mit Parametern gleich zu: MAS = (27 ± 2) % von FLp ; MAE = (64 ± 2) % von FL_{P} ; AD = (56 ± 5) % von FW_{P} ; AH = 14,5 ± 2 mm;
C) Unterstützung der hohen Fußgewölbestütze mit Parametern gleich: MAS = (26 ± 2) % von FLp ; MAE = (66 ± 2) % von FLp ; AD = (60 ± 5) % von FWp ; AH = 18,5 ± 2 mm;
- Messung der ersten Vielzahl von Parametern eines Fußes eines Benutzers;
- Gestaltung einer Einlegesohle (100) für den Benutzer mit einer Fußgewölbestütze (SZ), die durch die Konfigurationsparameter eines der drei Typen definiert ist.

2. Verfahren nach Anspruch 1, ferner die Schritte umfassend:
- Messung der folgenden zweiten Vielzahl von Dimensionsparametern des Fußes (200) des Benutzers: ein Bereich der Fußgewölbestütze AAp ; eine Position der Zehen TPp ; eine Risthöhe IHp ;
- Berechnung der folgenden Indizes ausgehend von der zweiten Vielzahl von Dimensionsparametern:
Ein erster *aarci- Index* = AA_{P} / TP_{P} ,
ein zweiter *aarci- Index H* = (AA_{P} * I_{HP} ) / TP_{P}² ;
- Vergleich des ersten Indexes und des zweiten Indexes mit Intervallen von vorbestimmten Werten, um den Fuß einem bestimmten Typ der drei Arten von Fußgewölbestützen (SZ) zuzuordnen.

3. Verfahren nach zumindest einem der vorangehenden Ansprüche, wobei die Fußgewölbestütze (SZ) dazu ausgebildet ist, als Stütze für das mediale Längsgewölbe des Fußes (200) des Benutzers zu wirken.

4. Verfahren zur Herstellung einer Innensohle (100), umfassend die Schritte:
- Gestaltung einer Innensohle (100) gemäß dem Gestaltungsverfahren von mindestens einem der vorhergehenden Ansprüche;
- Herstellung der Innensohle (100) durch Verbinden eines ersten Teils der Innensohle (10) und eines zweiten Teils der Innensohle (20).

5. Herstellungsverfahren nach Anspruch 4, wobei der Schritt des Herstellens der Innensohle (100) den Schritt umfasst:
- Herstellen durch Formen eines ersten Polyurethanmaterials des ersten Abschnitts (10), der dazu bestimmt ist, einen hinteren Abschnitt der Innensohle (100) zu bilden.

6. Herstellungsverfahren nach Anspruch 5, wobei das erste Polyurethanmaterial eine Härte von nichtweniger als 55 Shore A hat.

7. Herstellungsverfahren nach Anspruch 4 oder 5, wobei der Schritt des Herstellens der Innensohle (100) auch den Schritt umfasst:
- Herstellendurch Formen eines zweiten Polyurethanmaterials des zweiten Abschnitts (20) der Innensohle, der dazu bestimmt ist, einen Teil des ersten Abschnitts (10) zu bedecken und einen vorderen Abschnitt der Innensohle (100) zu bilden.

8. Herstellungsverfahren nach Anspruch 7, wobei das zweite Polyurethanmaterial eine Härte von weniger als 55 Shore A aufweist.

9. Verfahren nach mindestens einem der Ansprüche 7 und 8, wobei der Schritt des Herstellens des ersten Abschnitts der Innensohle (10) den Schritt umfasst:
- Ausbilden eines Hohlraums (15) in dem ersten Abschnitt der Innensohle (10) in Übereinstimmung mit der Fersensporn des Fußes (200);
- Füllen des Hohlraums (15) mit dem zweiten Polyurethanmaterial, das den zweiten Abschnitt(20) der Innensohle bildet.

10. Herstellungsverfahren nach mindestens einem der Ansprüche 5 bis 9, wobei das Herstellen des ersten Abschnitts (10) der Innensohle und des zweiten Abschnitts (20) der Innensohle das Bilden der Fußgewölbestütze (SZ) mit Bereichen unterschiedlicher Dichte umfasst.

## Revendications

1. Procédé de conception d'une semelle intérieure pour un utilisateur, comprenant les étapes de :
- définir les paramètres de configuration suivants pour l'arche plantaire de support (SZ): partie initiale de support pour une arche plantaire MAS; partie finale de support pour une arche plantaire MAE ; profondeur du support pour une arche plantaire AD; hauteur du support pour une arche plantaire AH ;
- définir une première pluralité de paramètres dimensionnels d'un pied (200) comprenant : une longueur de pied FL_{P} ; une largeur de pied FW_{P} ;
- définir, au moyen des dits paramètres de configuration, trois types de support pour l'arche plantaire selon les relations suivantes et en fonction de la première pluralité de paramètres dimensionnels d'un pied :
A) support pour l'arche plantaire basse ayant des paramètres tels que : MAS = (29 ± 3) % de FL_{P} ; MAE = (65 ± 2) % de FL_{P} ; AD = (48 ± 5) % de FW_{P} ; AH = 11, 5 ± 2 mm;
B) support pour l'arche plantaire moyenne ayant des paramètres tels que : MAS = (27 ± 2)% de FLp ; MAE = (64 ± 2) % de FLp ; AD = (56 ± 5) % de FW_{P} ; AH = 14, 5 ± 2 mm ;
C) support pour l'arche plantaire haute ayant des paramètres tels que : MAS = (26 ± 2)% de FL_{P} ; MAE = (66 ± 2)% de FL_{P} ; AD = (60 ± 5)% de FW_{P} ; AH = 18, 5 ± 2 mm ;
- mesurer la première pluralité de paramètres d'un pied d'un utilisateur ;
- concevoir une semelle intérieure (100) pour le dit utilisateur ayant un support d'arche plantaire (SZ) défini par les paramètres de configuration d'un des dits trois types.

2. Procédé selon la revendication 1, comprenant en outre les étapes de
- mesurer la deuxième pluralité suivante de paramètres dimensionnels du pied de l'utilisateur (200) : une zone de l'arche plantaire AAp ; une position des orteils TP_{P} ; une hauteur de cou-de-pied IH_{P};
- calculer les indices suivants à partir de la deuxième pluralité de paramètres dimensionnels :
un premier indice *aarci* = AA_{P} / TP_{P} ,
un deuxième indice *aarci H* = (AA_{P} * IH_{P} ) / TP_{P}²;
- comparer le premier indice et le deuxième indice avec des intervalles de valeurs prédéterminées pour associer le pied à un type spécifique des dits trois types de support d'arche plantaire (SZ).

3. Procédé selon au moins l'une des revendications précédentes, dans lequel le support d'arche plantaire (SZ) est conçu pour servir de support pour l'arche longitudinale médiane du pied (200) de l'utilisateur.

4. Procédé de fabrication d'une semelle intérieure (100), comprenant les étapes de :
- concevoir une semelle intérieure (100) selon le procédé de conception d'au moins l'une des revendications précédentes ;
- fabriquer la semelle intérieure (100) en joignant une première partie de la semelle intérieure (10) et une deuxième partie de la semelle intérieure (20).

5. Procédé de fabrication selon la revendication 4, dans lequel l'étape de fabrication de la semelle intérieure (100) comprend l'étape consistant à :
- fabriquer par moulage d'un premier matériau en polyuréthane la première partie (10) destinée à former une partie arrière de ladite semelle intérieure (100).

6. Procédé de fabrication selon la revendication 5, dans lequel ledit premier matériau en polyuréthane a une dureté non inférieure à 55 Shore A.

7. Procédé de fabrication selon la revendication 4 ou 5, dans lequel l'étape de fabrication de la semelle intérieure (100) comprend également l'étape consistant à:
- fabriquer par moulage d'un deuxième matériau en polyuréthane la deuxième portion de semelle (20) destinée à recouvrir une partie de ladite première portion (10) et à former une partie avant de la semelle intérieure(100).

8. Procédé de fabrication selon la revendication 7, dans lequel le dit deuxième matériau en polyuréthane a une dureté inférieure à 55 Shore A.

9. Procédé selon au moins l'une des revendications 7 et 8, dans lequel l'étape de fabrication de ladite première partie de semelle intérieure (10) comprend l'étape consistant à :
- former une cavité (15) dans la dite première partie plantaire (10) en correspondance avec l'épéron calcané du pied (200) ;
- remplir la dite cavité (15) avec le dit deuxième matériau en polyuréthane formant la deuxième partie de la semelle intérieure (20).

10. Procédé de fabrication selon au moins l'une des revendications 5 à 9, dans lequel la fabrication de ladite première partie de semelle intérieure (10) et de ladite deuxième partie de semelle intérieure (20) comprend la formation du dit support pour l'arche plantaire (SZ) ayant des zones de densité différente.
